# EUROPEAN PATENT APPLICATION

(11) **EP 4 092 966 A1**
(43) Date of publication of application: **23.11.2022**
(21) Application number: 21175148.2
(22) Date of filing: 21.05.2021
(51) Int. Cl.: H04L 12/28, H04L 12/24, H04L 12/715, H04L 12/721, H04L 12/707, H04L 12/725, H04L 12/717, H04L 12/775, H04L 12/803, H04L 12/911, H04L 12/915, H04L 12/927, H04L 29/06, H04L 29/08, H04L 12/933, H04L 12/947

(54) **METHOD FOR OPERATING A BROADBAND ACCESS NETWORK OF A TELECOMMUNICATIONS NETWORK COMPRISING AT LEAST ONE CENTRAL OFFICE POINT OF DELIVERY, SYSTEM, BROADBAND ACCESS NETWORK OR TELECOMMUNICATIONS NETWORK, CENTRAL OFFICE POINT OF DELIVERY CLUSTER, PROGRAM AND COMPUTER-READABLE MEDIUM**

(71) Applicant: Deutsche Telekom AG, 53113 Bonn (DE)
(72) Inventor: SOUKUP, Robert, 60594 Frankfurt am Main (DE)
(74) Representative: Schwöbel, Thilo K.

(57) **Abstract**

The invention relates to a method for operating a broadband access network of a telecommunications network comprising at least one central office point of delivery, the central office point of delivery comprising a switching fabric comprising a plurality of spine network nodes and a plurality of leaf network nodes, wherein the central office point of delivery comprises or is connected to an access functionality being realized by means of a plurality of access nodes that terminate physical subscriber lines providing communication services to end users or subscribers of the telecommunications network , wherein a first access node is connected or linked to a first leaf network node and a second access node is connected or linked to a second leaf network node , wherein the first access node is related to first end users or subscribers and the second access node is related to second end users or subscribers,
wherein the first access node is connected or homed to both the first and the second leaf network node,
wherein in order to provide for a service continuity of or regarding the first access node and the first end users or subscribers in case of a failure situation or an overload situation of the first leaf network node, the method comprises the following steps:
-- in a first step, at least part of the communication services related to the first access node and the first end users or subscribers is taken over or provided by the second leaf network node,
-- in a second step, the second leaf network node provides communication services related to both the first and second access nodes, wherein regarding the combination of the first and second access nodes and/or the combination of the first and second end users or subscribers, the respective communication services are provided, at least regarding a part of these access nodes and/or end users or subscribers, in or according to an emergency mode of operation and/or in a reduced or curtailed manner.

## Description

### BACKGROUND

The present invention relates to a method for operating a broadband access network of a telecommunications network comprising at least one central office point of delivery, the central office point of delivery comprising a switching fabric comprising a plurality of spine network nodes and a plurality of leaf network nodes, wherein the central office point of delivery comprises or is connected to an access functionality being realized by means of a plurality of access nodes that terminate physical subscriber lines providing communication services to end users or subscribers of the telecommunications network, wherein a first access node is connected or linked to a first leaf network node and a second access node is connected or linked to a second leaf network node.

Furthermore, the present invention relates to a system for operating a broadband access network of a telecommunications network comprising at least one central office point of delivery, the central office point of delivery comprising a switching fabric comprising a plurality of spine network nodes and a plurality of leaf network nodes, wherein the central office point of delivery comprises or is connected to an access functionality being realized by means of a plurality of access nodes that terminate physical subscriber lines providing communication services to end users or subscribers of the telecommunications network, wherein a first access node is connected or linked to a first leaf network node and a second access node is connected or linked to a second leaf network node.

Additionally, the present invention relates to a broadband access network or telecommunications network for operating a broadband access network of a telecommunications network comprising at least one central office point of delivery, the central office point of delivery comprising a switching fabric comprising a plurality of spine network nodes and a plurality of leaf network nodes, wherein the central office point of delivery comprises or is connected to an access functionality being realized by means of a plurality of access nodes that terminate physical subscriber lines providing communication services to end users or subscribers of the telecommunications network, wherein a first access node is connected or linked to a first leaf network node and a second access node is connected or linked to a second leaf network node.

Furthermore, the present invention relates to a central office point of delivery configured for being operated in an inventive broadband access network or in an inventive telecommunications network.

Furthermore, the present invention relates to a program and a computer-readable medium for an operation of an inventive broadband access network and/or of an inventive telecommunications network.

The exchange of packetized information in broadband communication systems or telecommunications networks, both in fixed-line as in wireless communication systems (or fixed-line communication networks and mobile communication networks) has already grown dramatically and probably will also grow in the future due to the rapid spread of different data services in such communication networks.

In conventionally known architectures involving one central office point of delivery (or a plurality thereof), a central office point of delivery typically comprises a switching fabric, the switching fabric comprising a plurality of spine network nodes and a plurality of leaf network nodes (or leaf switches). Typically, an access node is connected to a single leaf switch. In case this very leaf has an outage, all customers connected to this leaf (switch or network node) experience a service interruption, hence, the leaf (switch or network node) defines the "crater size" of such an event, i.e. the leaf switch (or leaf network node) corresponds to a single point of failure regarding these customers or users, especially with regard to one and the same central office point of delivery. However, just providing spare capacity in dimensioning of such leaf switches or leaf network nodes in a manner that allows them to handle and to serve (in a failover situation) more customers (e.g. up to twice the number of customers) than are normally handled or served would not only require to use greatly increased computing resources, and, hence, the related expenses, but these increased resources would also be unused most of the time, i.e. in load situations without a failover to be handled.

### SUMMARY

An object of the present invention is to provide a technically simple, effective and cost effective solution for operating a broadband access network of a telecommunications network comprising at least one central office point of delivery, the central office point of delivery comprising or being connected to both a switching fabric with a plurality of spine and leaf network nodes, and an access functionality for terminating physical subscriber lines, such that an increased flexibility and/or resiliency within the telecommunications network and/or a higher degree of service continuity in case of a failure situation or an overload situation of a leaf network node is able to be handled without requiring a massive increase of the associated computing resources. A further object of the present invention is to provide a corresponding system, a corresponding broadband access network or telecommunications network, a corresponding central office point of delivery according to the present invention.

The object of the present invention is achieved by a method for operating a broadband access network of a telecommunications network comprising at least one central office point of delivery, the central office point of delivery comprising a switching fabric comprising a plurality of spine network nodes and a plurality of leaf network nodes, wherein the central office point of delivery comprises or is connected to an access functionality being realized by means of a plurality of access nodes that terminate physical subscriber lines providing communication services to end users or subscribers of the telecommunications network, wherein a first access node is connected or linked to a first leaf network node and a second access node is connected or linked to a second leaf network node, wherein the first access node is related to first end users or subscribers and the second access node is related to second end users or subscribers, wherein the first access node is connected or homed to both the first and the second leaf network node, wherein in order to provide for a service continuity of or regarding the first access node and the first end users or subscribers in case of a failure situation or an overload situation of the first leaf network node, the method comprises the following steps:
-- in a first step, at least part of the communication services related to the first access node and the first end users or subscribers is taken over or provided by the second leaf network node,
-- in a second step, the second leaf network node provides communication services related to both the first and second access nodes, wherein regarding the combination of the first and second access nodes and/or the combination of the first and second end users or subscribers, the respective communication services are provided, at least regarding a part of these access nodes and/or end users or subscribers, in or according to an emergency mode of operation and/or in a reduced or curtailed manner.

It is thereby advantageously possible according to the present invention to provide a solution such that a plurality of access nodes are connected or linked, respectively, not only to one leaf network node each, but to at least two leaf network nodes (especially of the same central office point of delivery), respectively, such that, in case that one of the leaf network nodes fails or is in an overload situation, it is possible to provide at least part of the functionality of the failed leaf network node by the at least one other leaf network node. It is thereby advantageously possible according to the present invention that - especially in a scenario where a plurality of central office points of delivery, e.g. several dozen central office points of delivery or even several hundreds of central office points of delivery, are deployed in or as part of a telecommunications network or a broadband access network, and each of these central office points of delivery are equipped with or comprise a leaf/spine architecture where the spine network nodes are fully redundant - also the corresponding leaf network nodes (that are typically terminating the customer sessions, i.e. the communication sessions towards the (client) devices or customer premises equipments of the end users or subscribers of the telecommunications network, connected via the respective access functionality) do not constitute single points of failure (with regard, especially, to one and the same central office point of delivery).

It is especially advantageous according to the present invention that - in order to provide for a service continuity of or regarding a first access node and first end users or subscribers in case of a failure situation or in case of an overload situation of the first leaf network node (provided that the first access node is connected or linked to both a first and second leaf network nodes (especially of the same central office point of delivery) and a second access node (and, accordingly, second end users or subscribers) is (are) connected or linked to the second leaf network node) - not only (in the first step according to the present invention) at least part of the communication services related to the first access node and the first end users or subscribers is (or are able to be) taken over or provided by the second leaf network node but also that this is possible without requiring the second leaf network node to be sufficiently capable or performant to fully handle (in a normal manner) the communication services related to both the first and the second access nodes without any impediment. According to the present invention, it is, hence, advantageously provided for an efficient resource allocation of the first and second leaf network node such that both leaf network nodes are capable of handling or providing the communication services of the nominal or regular number of first or second end users or subscribers, respectively, and also to be able to handle or to provide communication services related to the combination of the first and second access nodes and/or the combination of the first and second end users or subscribers, albeit - at least partly (i.e. partly regarding a part of the first and/or second access nodes or partly regarding a part of the first and/or second end users or subscribers or partly regarding a part of the communication services provided to the first and/or second access nodes or end users or subscribers) - in a reduced or curtailed manner or in an emergency mode of operation.

Hence, it is advantageously possible according to the present invention to provide for a failover (or overload) functionality and for a removal of the leaf network node (of a corresponding access node and its end users or subscribers) being a single point of failure, especially within one and the same central office point of delivery, without the requirement to (permanently) provide the respective leaf network node with a significantly increased performance or with significantly increased resources (such as, e.g., the double of the nominal performance or resources) just for the (comparatively rare) cases or situations of a failover or an overload. This also provides the advantage that such an increased performance or such increased resources (typically in several dimensions like throughput, schedulers, etc.) is able to be avoided according to the present invention, along with the corresponding waste of resources and expenses (with regard to the normal mode of operation).

A further advantage according to the present invention is to be able to provide not only for a higher level of resilience but also for load balancing between the first and second leaf network node (regarding the first and second end users or subscribers), especially with respect to the respective first and second access nodes connected to the central office points of delivery. Hence, according to the present invention, in order to more flexibly and/or more resiliently operate the leaf network nodes as part of the central office point of delivery, the inventive method also advantageously provides for load sharing between the first and second leaf network nodes - thus still further potentially reducing the required performances and resources of the respective leaf network nodes, especially of the considered central office point of delivery.

The telecommunications network according to the present invention might be a fixed-line telecommunications network or a mobile communication network but could also have both aspects, i.e. parts of a fixed-line telecommunications network (or being a fixed-line telecommunications network in such parts) and parts of a mobile communication network (or being a mobile communication network in such parts); such networks are also known under the term fixed-mobile-convergence networks (FMC networks).

According to the present invention, it is advantageously possible and preferred that - besides the first access node being connected or homed to both the first and the second leaf network nodes - also the second access node is connected or homed to both the first and the second leaf network node.

It is thereby advantageously possible according to the present invention that - symmetrically to a failover situation of the first leaf network node - in a failover situation (or overload situation) of the second leaf network node, the first leaf network node takes over at least part of the communication services related to the second access node and the second end users or subscribers.

According to the present invention, it is, of course, possible and preferred that the first access node (and its respective first end users or subscribers) is not only connected (or homed) to both the first and second leaf network nodes but also to a third leaf network node - or even to still further leaf network nodes, such as a fourth leaf network node (and this might also apply, analogously, to the second access node (and its respective second end users or subscribers), and so forth. However, such a multi-homing realization or connection (i.e. beyond dual-homing) of the access nodes (and their respective end users or subscribers) also increases the efforts and requirements for providing the respective (hardware) connections (also in terms of, typically, optical to electrical converters, e.g. as small form pluggable, SFP, elements) - and this typically without providing a corresponding increase of resiliency.

According to a further preferred embodiment of the present invention, - besides the first access node being connected or homed to both the first and the second leaf network nodes - the second access node is connected or homed to the second leaf network node and to a third leaf network node, wherein in order to provide for a service continuity in case of a failure situation or an overload situation of the first leaf network node, in the first and/or second step, a part of the communication services related to the second access node is shifted to the third leaf network node.

By means of, thus, connecting (or homing) the first access node to both the first and the second leaf network nodes (but especially not to the third leaf network node), and by means of connecting (or homing) the second access node to (especially only) the second and third leaf network nodes, it is advantageously possible to efficiently implement the method according to the present invention and to use three leaf network nodes in order to realize the inventive benefits to an even larger extend: especially, it is advantageously possible to provide for a service continuity and load balancing functionality among the second and third leaf network node in case of a failure situation or an overload situation of the first leaf network node, i.e. in case of such a failure or overload situation (of the first leaf network node), in the first and/or second step, a part of the communication services related to the second access node is able to be shifted to the third leaf network node (without the first access node necessarily being connected to the third leaf network node). Of course according to such an embodiment of the present invention, it would be especially advantageous to connect (or home) the respective end users or subscribers of the third leaf network node (i.e. of a third access node), besides to the third leaf network node, to the first leaf network node; in such a scenario, the first, second and third leaf network nodes would constitute a failover resiliency (and/or load balancing) group of leaf network nodes.

Of course according to a further variant of such an embodiment, the respective end users or subscribers of the third leaf network node (i.e. of the third access node), are able to be connected or homed to still a further (i.e. fourth) leaf network node (and the respective end users or subscribers of the fourth leaf network node (i.e. of a fourth access node), besides to the fourth leaf network node, be connected or homed to the first leaf network node, such as for the first, second, third, and fourth leaf network nodes constituting a failover resiliency (and/or load balancing) group of leaf network nodes.

According to a further embodiment of the present invention, the broadband access network or the telecommunications network comprises - besides the central office point of delivery - at least one further central office point of delivery, wherein the further central office point of delivery comprises a further switching fabric comprising a plurality of further spine network nodes and a plurality of further leaf network nodes, wherein the second leaf network node corresponds to one of the further leaf network nodes or wherein one of the further leaf network nodes are used as the second leaf network node.

Thereby, it is advantageously possible to easily and efficiently implement the inventive method with the first and second leaf network node being part of different central office points of delivery.

Furthermore, according to a preferred embodiment of the present invention, the central office point of delivery comprises (or the central office point of delivery and the further central office point of delivery, respectively, comprise) a control functionality or control plane, a management functionality or management plane, as well as an edge functionality or service, wherein the switching fabric (or, the switching fabric (of the central office point of delivery) and the further switching fabric (of the further central office point of delivery) realize a transport functionality or service,
wherein especially both the first and the second leaf network nodes comprise traffic shaping hardware components, especially comprising significant Ternary Content Address Memory, TCAM.

Thereby, it is advantageously possible to efficiently implement the method according to the present invention. Especially, it is advantageously possible to dimension the different traffic shaping hardware components such as to assure a nominally expected load (and, hence, avoid to provide spare capacity solely in order to be able to provide for failover and/or overload situations) and still be able to handle failure situations or overload situations.

According to a further embodiment of the present invention, in the second step, regarding the combination of the first and second access nodes and/or the combination of the first and second end users or subscribers, the respective communication services are provided for all these access nodes and/or end users or subscribers, in or according to an emergency mode of operation and/or in a reduced or curtailed manner.

Furthermore, according to a preferred embodiment of the present invention, in the second step, regarding the second access node and/or regarding the second end users or subscribers, the respective communication services are provided in or according to a normal mode of operation and/or unimpeded, and regarding the first access nodes and/or regarding the first end users or subscribers, the respective communication services are provided according to an emergency mode of operation and/or in a reduced or curtailed manner.

According to a further embodiment of the present invention, in the second step, regarding both
-- a part of the first access node and/or a part of the first end users or subscribers, and
-- a part of the second access node and/or a part of the second end users or subscribers,
the respective communication services are provided in or according to a normal mode of operation and/or unimpeded, and regarding the residual of the first and second access nodes and/or of the first and second end users or subscribers, the respective communication services are provided according to an emergency mode of operation and/or in a reduced or curtailed manner.

By means of these different embodiments of the present invention, it advantageously possible to flexibly and efficiently implement the method according to the present invention.

Furthermore, according to a preferred embodiment of the present invention, providing communication services according to an emergency mode of operation and/or in a reduced or curtailed manner involves at least two different emergency modes of operation, wherein
-- a first emergency mode of operation relates to providing only an emergency functionality, especially emergency calls, and
-- a second emergency mode of operation relates to providing a limited functionality especially regarding at least one of the following aspects:
-- acquiring and/or processing metering information and/or accounting information and/or flow or queue counter information,
-- handling and/or processing of queues, especially providing hierarchical quality-of-service scheduling.

Thereby, it is advantageously possible to provide an even increased level of flexibility and efficiency when implementing the method according to the present invention.

According to a further embodiment of the present invention, a priority indication is associated or assigned to each communication request or to each request of communication services, wherein providing communication services according to an emergency mode of operation and/or in a reduced or curtailed manner involves providing or processing communication requests or the requests of communication services only in case that the respective priority indication of the communication requests or of the requests of communication services has a certain value or certain values, especially only in case that the respective priority indication exceeds a certain value or certain values.

Thereby, it is advantageously possible to provide an even increased level of flexibility and efficiency when implementing the method according to the present invention.

Furthermore, the present invention relates to a system for operating a broadband access network of a telecommunications network comprising at least one central office point of delivery, the central office point of delivery comprising a switching fabric comprising a plurality of spine network nodes and a plurality of leaf network nodes, wherein the central office point of delivery comprises or is connected to an access functionality being realized by means of a plurality of access nodes that terminate physical subscriber lines providing communication services to end users or subscribers of the telecommunications network,
wherein a first access node is connected or linked to a first leaf network node and a second access node is connected or linked to a second leaf network node, wherein the first access node is related to first end users or subscribers and the second access node is related to second end users or subscribers,
wherein the first access node is connected or homed to both the first and the second leaf network node,
wherein in order to provide for a service continuity of or regarding the first access node and the first end users or subscribers in case of a failure situation or an overload situation of the first leaf network node, the system is configured and dimensioned such that:
-- at least part of the communication services related to the first access node and the first end users or subscribers is taken over or provided by the second leaf network node,
-- the second leaf network node provides communication services related to both the first and second access nodes, wherein regarding the combination of the first and second access nodes and/or the combination of the first and second end users or subscribers, the respective communication services are provided, at least regarding a part of these access nodes and/or end users or subscribers, in or according to an emergency mode of operation and/or in a reduced or curtailed manner.

Additionally, the present invention relates to a broadband access network or telecommunications network for operating a broadband access network of a telecommunications network comprising at least one central office point of delivery, the central office point of delivery comprising a switching fabric comprising a plurality of spine network nodes and a plurality of leaf network nodes, wherein the central office point of delivery comprises or is connected to an access functionality being realized by means of a plurality of access nodes that terminate physical subscriber lines providing communication services to end users or subscribers of the telecommunications network, wherein a first access node is connected or linked to a first leaf network node and a second access node is connected or linked to a second leaf network node, wherein the first access node is related to first end users or subscribers and the second access node is related to second end users or subscribers, wherein the first access node is connected or homed to both the first and the second leaf network node, wherein in order to provide for a service continuity of or regarding the first access node and the first end users or subscribers in case of a failure situation or an overload situation of the first leaf network node, the broadband access network or the telecommunications network is configured and dimensioned such that:
-- at least part of the communication services related to the first access node and the first end users or subscribers is taken over or provided by the second leaf network node,
-- the second leaf network node provides communication services related to both the first and second access nodes, wherein regarding the combination of the first and second access nodes and/or the combination of the first and second end users or subscribers, the respective communication services are provided, at least regarding a part of these access nodes and/or end users or subscribers, in or according to an emergency mode of operation and/or in a reduced or curtailed manner.

Additionally, the present invention relates to a central office point of delivery configured for being operated in an inventive broadband access network or in an inventive telecommunications network.

Still additionally, the present invention relates to a program comprising a computer readable program code which, when executed on a computer and/or on a network node of a telecommunications network and/or on a leaf node of a switching fabric as part of a first or second central office point of delivery, or in part on the network node of a telecommunications network and/or in part on the leaf node of a switching fabric as part of a first or second central office point of delivery, causes the computer and/or the network node of the telecommunications network and/or the leaf node of a switching fabric as part of a first or second central office point of delivery to perform the inventive method.

Furthermore, the present invention relates to a computer-readable medium comprising instructions which when executed on a computer and/or on a network node of a telecommunications network and/or on a leaf node of a switching fabric as part of a first or second central office point of delivery, or in part on the network node of a telecommunications network and/or in part on the leaf node of a switching fabric as part of a first or second central office point of delivery, causes the computer and/or the network node of the telecommunications network and/or the leaf node of a switching fabric as part of a first or second central office point of delivery to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network according to the present invention, having a broadband access network with a central office point of delivery.
Figure 2 schematically shows in greater detail one central office point of delivery comprising a certain number of components, entities and/or network nodes, wherein a first access node is connected or homed to both a first and a second leaf network node.
Figure 3 schematically shows in greater detail two central office points of delivery comprising a certain number of components, entities and/or network nodes, wherein a first access node (of one of the central office points of delivery) is connected or homed to both a first leaf network node (of the one central office point of delivery) and a second leaf network node (of the other central office point of delivery).

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order; this is especially the case for the terms "first step", "second step", etc. It is to be understood that the terms so used are interchangeable under appropriate circumstances and that the embodiments of the invention described herein are capable of operation in other sequences than described or illustrated herein.

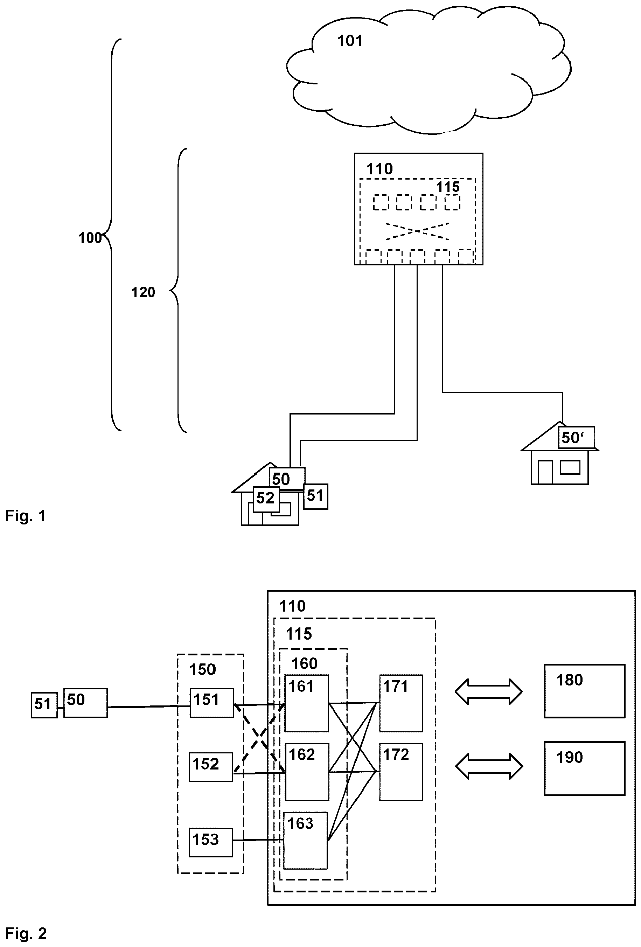

In Figure 1, a telecommunications network 100 according to the present invention is schematically shown, having - preferably - at least a fixed line part. A mobile (or cellular) part might be present as well, as part of the telecommunications network 100, but is not specifically illustrated in Figure 1. User equipments or client devices 51, 52 are connected to the telecommunications network 100 by means of a (broadband) access network 120. The telecommunications network 100 comprises, especially as part of the broadband access network 120, at least one logical or physical central office point of delivery 110 that is preferably realized within a (mini) data center and that is especially handling different access requirements, especially different access possibilities, of the client devices 51, 52 to network functionalities provided by the telecommunications network 100 or via the telecommunications network 100. In addition, the telecommunications network 100 typically also comprises - besides the broadband access network 120 - a core network 101. The client devices 51, 52 are typically connected to the logical or physical central office point of delivery 110 by means of a customer premises equipment device 50, 50' or by means of a customer premises equipment functionality that might be built into or realized by the client devices 51, 52. Preferably, the central office point of delivery 110 comprises a switching fabric 115 comprising a plurality of spine network nodes and typically also a plurality of leaf network nodes which are not explicitly represented in Figure 1.

Figure 2 schematically illustrates a central office point of delivery 110 as part of a broadband access network 120 of a telecommunications network 100, wherein the represented part of the telecommunications network 100 comprises - besides a control functionality or control plane 180, and a management functionality or management plane 190 - a plurality of line termination nodes 151, 152, 153 or access nodes 151, 152, 153 (as part of an access functionality 150). In the example represented in Figure 2, the broadband access network 120 comprises three access nodes, a first access node 151, a second access node 152, and a third access node 153. The access nodes 151, 152, 153 might be provided to support different access technologies to a home gateway or customer premises equipment or cable modem 50. In the exemplary embodiment shown in Figure 2, the first access node 151 is taken, e.g., as a line termination node in the form of a hybrid fiber coaxial network equipment, supporting to be connected to a hybrid fiber coaxial network, typically comprising a plurality of (passive) coaxial infrastructure access points. In such a situation, a client device 51 (or a plurality of client devices which are not specifically represented in Figure 2) is (or are) connected to the telecommunications network 100 (i.e. to the first access node 151 or hybrid fiber coaxial network equipment) via the cable modem 50 (or customer premises equipment 50 or home gateway device 50). The functionality of the client device 51 and the functionality of the customer premises equipment 50 (or home gateway device 50 or cable modem 50) might be integrated in one device or "box". Nevertheless, these functionalities are represented in Figure 2 as separated functionalities. In Figure 2, only one cable modem device 50 (or customer premises equipment 50) (i.e. a specific customer premises equipment), and only one client device 51 are shown. However, also the second and/or third access nodes 152, 153 might be realized as hybrid fiber coaxial network equipment, connected, e.g., to corresponding coaxial infrastructure access points and cable modem devices (not represented in Figure 2). In the exemplary embodiment of the central office point of delivery 110 shown in Figure 2, the central office point of delivery 110 comprises a switching fabric 115 as a transport functionality or service 115 within the central office point of delivery 110. The switching fabric 115 (or transport functionality or service 115) comprises a plurality of spine network nodes 171, 172 and a plurality of leaf network nodes 161, 162, 163, the leaf network nodes 161, 162, 163 (i.e., according to the exemplary embodiment shown in Figure 2, a first leaf network node 161, a second leaf network node 162, and a third leaf network node 163) especially providing the edge functionality or service 160 within the central office point of delivery 110.

In the exemplary embodiment of the central office point of delivery 110 shown in Figure 2, the first access node 151 is connected to the first leaf network node 161, the second access node 152 is connected to the second leaf network node 162, and the third access node 153 is connected to the third leaf network node 163. In addition, the first access node 151 is shown connected (or dual-homed; schematically indicated, in Figure 2, by means of a dashed line) to the second leaf network node 162, and the second access node 152 is shown connected (or dual-homed; schematically indicated, in Figure 2, by means of a dashed line) to the first leaf network node 161. However, according to another embodiment according to the present invention, alternatively the second access node 152 could be connected (or dual-homed) to the third leaf network node 163 (instead of (or in addition to) the first leaf network node 161), and - especially according such an embodiment that is not shown in Figure 2 - the third access node 153 is able to be connected (or dual-homed) to the first leaf network node 161.

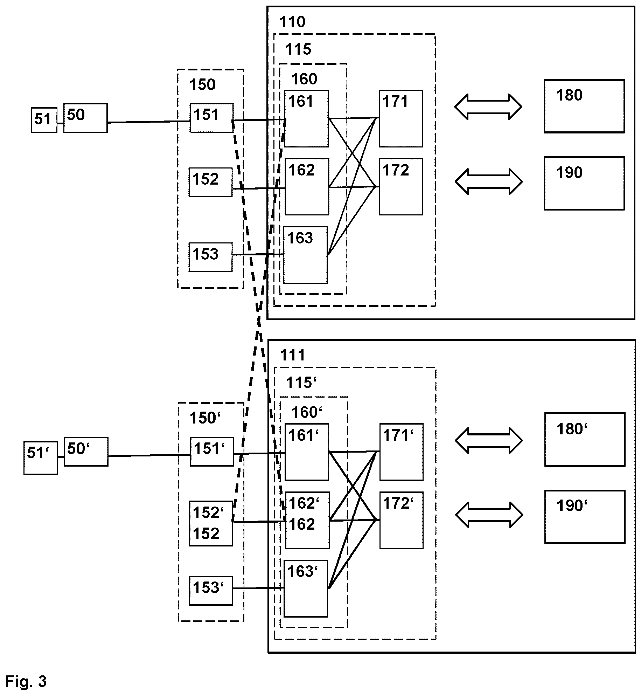

In Figure 3, two central office points of delivery 110, 111 are exemplarily shown as part of the broadband access network 120 of the telecommunications network 100, wherein a first access node (of one of the central office points of delivery) is connected or homed to both a first leaf network node (of the one central office point of delivery) and a second leaf network node (of the other central office point of delivery). The represented part of the central office point of delivery 110 comprises the components, entities and/or network nodes as described above in connection to Figure 2. The further central office point of delivery 111 likewise comprises - besides a further control functionality or control plane 180', and a further management functionality or management plane 190' - a plurality of further line termination nodes 151', 152', 153' or further access nodes 151', 152', 153' (as part of a further access functionality 150'). In the example represented in Figure 3, the further central office point of delivery 111 (in addition to the first, second and third access nodes 151, 152, 153 of the central office point of delivery 110) comprises three access nodes, a first (further) access node 151', a second (further) access node 152', and a third (further) access node 153'. The further access nodes 151', 152', 153' might be provided to support different access technologies to a home gateway or customer premises equipment or cable modem 50'. A further client device 51' (or a plurality of further client devices which are not specifically represented in Figure 3) is (or are) connected to the telecommunications network 100 (i.e. to the first further access node 151') via the further cable modem 50' (or further customer premises equipment 50' or further home gateway device 50'). In Figure 3, only one (further) cable modem device 50' (or (further) customer premises equipment 50'), and only one (further) client device 51' are shown. However, also the second and/or third further access nodes 152', 153' might be realized as hybrid fiber coaxial network equipment, connected, e.g., to corresponding coaxial infrastructure access points and cable modem devices (not represented in Figure 3). In the exemplary embodiment of the further central office point of delivery 111 shown in Figure 3, the further central office point of delivery 111 comprises a further switching fabric 115' as a further transport functionality or service 115' within the further central office point of delivery 111. The further switching fabric 115' (or further transport functionality or service 115') comprises a plurality of further spine network nodes 171', 172' and a plurality of further leaf network nodes 161', 162', 163', the further leaf network nodes 161', 162', 163' (i.e., according to the exemplary embodiment shown in Figure 3, a first further leaf network node 161', a second further leaf network node 162', and a third further leaf network node 163') especially providing the further edge functionality or service 160' within the further central office point of delivery 111.

In the exemplary embodiment of the central office point of delivery 110 shown in Figure 3, the first access node 151 is connected to the first leaf network node 161, the second access node 152 is connected to the second leaf network node 162, and the third access node 153 is connected to the third leaf network node 163. In addition, the first access node 151 is shown connected (or dual-homed; schematically indicated, in Figure 3, by means of a dashed line) to the second further leaf network node 162', and the second further access node 152' is shown connected (or dual-homed; schematically indicated, in Figure 3, by means of a dashed line) to the first leaf network node 161. However, according to another embodiment according to the present invention, alternatively the second further access node 152' could be connected (or dual-homed) to the third leaf network node 163 (instead of (or in addition to) the first leaf network node 161), and - especially according such an embodiment that is not shown in Figure 3 - the third access node 153 is able to be connected (or dual-homed) to the first leaf network node 161.

Hence, according to the present invention, a method for operating a broadband access network 120 is provided such that the first access node 151 (being related to first end users or subscribers) is connected or linked to the first leaf network node 161 and the second access node 152 (being related to second end users or subscribers) is connected or linked to the second leaf network node 162, and the first access node 151 is additionally connected or homed to the second leaf network node 162. In such a situation, it is advantageously possible to provide service continuity of or regarding the first access node 151 (and the first end users or subscribers) in case of a failure situation or an overload situation of the first leaf network node 161 by means of at least part of the communication services related to the first access node 151 and the first end users or subscribers being taken over or provided by the second leaf network node 162. In order not to require the second leaf network node 162 to be configured to bear twice its ordinary load, the second leaf network node 162 is allowed, according to the present invention, to provide communication services related to both the first and second access nodes 151, 152 in a manner such that - regarding the combination of the first and second access nodes 151, 152 and/or the combination of the first and second end users or subscribers - the respective communication services are provided, at least regarding a part of these access nodes and/or end users or subscribers, in or according to an emergency mode of operation and/or in a reduced or curtailed manner.

Hence, in such a dual-homing scenario, a leaf as service edge (i.e. the second leaf network node 162) would need to cater in a fail-over case for double the number of customers. This would require this leaf to be powered with double the actual performance (in several dimensions like throughput, schedulers, ...), i.e. it would have to be dimensioned in all its capabilities and performance parameters for serving both the first and second access nodes 151, 152 - which would require an over-dimensioning of the network, or, the other way around: 50% of such a leaf's capacity would be unused if nothing breaks. This would be a waste of resources and quite expensive, and, according to the present invention, is able to be avoided.

According to the present invention, the second leaf network node 162 constantly serves its customers (i.e. the (second) end users and subscribers) connected to the corresponding (second) access node 152 with the full feature set, and the dimensioning of the (second) leaf network node 162 is calculated accordingly. The dimensioning of this (second) leaf network node 162 is limited by several restricting key factors, such as, e.g., (a) adequate switching performance for data up-/downstream through-put, (b) large buffers for hierarchical scheduling, (c) switching capabilities for several data priorities (e.g. an emergency call is higher priority than watching Youtube videos), etc. In case of an outage (failure) of the (first) leaf network node 161, the (second) leaf network node 162 might either
-- change its production profile to "emergency mode", which is to serve all customers (i.e. both the 'own' end users or subscribers, i.e. connected to the second access node 152, as well as the first end users or subscribers of the first access node 151, dual-homed to the second leaf network node 162) using a minimal feature set (e.g. just allowing emergency calls); this might violate the end customer's product terms and conditions, but most customers would probably not realize and hence would with enhanced likelihood not call the service hotline, or
-- while continuing to serve its 'own' end users or subscribers, i.e. connected to the second access node 152, in a manner unchanged, the second leaf network node 162 might offer customers on the first access node 151 a minimum production set (e.g. just allowing emergency calls).

According to the present invention, there are, of course, various embodiments possible of how the performance could be distributed between the first and second access nodes 151, 152; for example, the performance of certain services could be restricted for one or both access nodes. Typically, in such a failover situation, it would be looked at the most expensive limiting functionality (of or within the second leaf network node 162) and decide what can still be reasonably offered to the then possibly doubled customer volume; the pure bandwidth capability is usually not the limiting factor; what is, typically, expensive are fixed quality levels; e.g. for business customers, it could be said that customers of the broken leaf network node (i.e. the first leaf network node 161 in the example) get best effort on the second leaf network node 162 which is better than nothing, and the other customers keep their high quality service (e.g. business customers).

In addition, according to the present invention, the control of the performance (load balancing) of the second leaf network node 162 is preferably able to be folded with the current utilization of the broken down and/or the taking over leaf. Here, the load could be determined by actual measurements and/or an, e.g. time-dependent, load curve (e.g. load during the day).

According to the present invention, it is advantageously possible to group a given number of leaf network nodes into groups, providing that in the event of a failure of one of these leaf network nodes in the group, one, two or more leaf network nodes (up to the maximum number of leaf network nodes remaining active in the group) would flexibly supply the access node served by the failed leaf network node, depending on the workload. The load that was carried by the failed leaf network node would then be distributed among the other leaf network nodes (e.g., depending on the current load of the other leaf network nodes). Of course, this assumes that an access node can be served by multiple leaf network nodes.

In the context of the present invention, the first and second leaf network node 161, 162 are typically symmetric (or exchangeable). Hence, preferably, not only the first access node 151 is dual-homed to the second leaf network node 162 (i.e. it is connected to both the first and the second leaf network nodes 161, 162), but also the second access node 152 is connected or homed to both the first and the second leaf network node 161, 162.

However, according to still another embodiment of the present invention, - besides the first access node 151 being connected or homed to both the first and the second leaf network nodes 161, 162 - the second access node 152 is connected or homed to the second leaf network node 162 and to a third leaf network node 163, wherein in order to provide for a service continuity in case of a failure situation or an overload situation of the first leaf network node 161, in the first and/or second step a part of the communication services related to the second access node 152 is shifted to the third leaf network node 163. Especially in this embodiment, the third access node 153 is dual homed (besides to the third leaf network node 163) to the first leaf network node 161 - hence, without the requirement of the access nodes 151, 152, 153 to be connected to all three leaf network nodes 161, 162, 163, it is still possible to provide for a load balancing between the two available leaf network nodes 162, 163 in case that the first leaf network node 161 breaks. Of course, this scenario could be applied also to four or five or six or seven or eight leaf network nodes (in which case the corresponding access node of the last leaf network node would be dual-homed to the first leaf network node 161.

## Claims

1. Method for operating a broadband access network (120) of a telecommunications network (100) comprising at least one central office point of delivery (110), the central office point of delivery (110) comprising a switching fabric (115) comprising a plurality of spine network nodes (171, 172) and a plurality of leaf network nodes (161, 162), wherein the central office point of delivery (110) comprises or is connected to an access functionality (150) being realized by means of a plurality of access nodes (151, 152, 153) that terminate physical subscriber lines providing communication services to end users or subscribers of the telecommunications network (100),
wherein a first access node (151) is connected or linked to a first leaf network node (161) and a second access node (152) is connected or linked to a second leaf network node (162), wherein the first access node (151) is related to first end users or subscribers and the second access node (152) is related to second end users or subscribers,
wherein the first access node (151) is connected or homed to both the first and the second leaf network node (161, 162),
wherein in order to provide for a service continuity of or regarding the first access node (151) and the first end users or subscribers in case of a failure situation or an overload situation of the first leaf network node (161), the method comprises the following steps:
-- in a first step, at least part of the communication services related to the first access node (151) and the first end users or subscribers is taken over or provided by the second leaf network node (162),
-- in a second step, the second leaf network node (162) provides communication services related to both the first and second access nodes (151, 152), wherein regarding the combination of the first and second access nodes (151, 152) and/or the combination of the first and second end users or subscribers, the respective communication services are provided, at least regarding a part of these access nodes and/or end users or subscribers, in or according to an emergency mode of operation and/or in a reduced or curtailed manner.

2. Method according to claim 1, wherein - besides the first access node (151) being connected or homed to both the first and the second leaf network nodes (161, 162) - also the second access node (152) is connected or homed to both the first and the second leaf network node (161, 162).

3. Method according to one of the preceding claims, wherein - besides the first access node (151) being connected or homed to both the first and the second leaf network nodes (161, 162) - the second access node (152) is connected or homed to the second leaf network node (162) and to a third leaf network node (163), wherein in order to provide for a service continuity in case of a failure situation or an overload situation of the first leaf network node (161), in the first and/or second step a part of the communication services related to the second access node (152) is shifted to the third leaf network node (163).

4. Method according to one of the preceding claims, wherein the broadband access network (120) or the telecommunications network (100) comprises - besides the central office point of delivery (110) - at least one further central office point of delivery (111), wherein the further central office point of delivery (111) comprises a further switching fabric (115') comprising a plurality of further spine network nodes (171', 172') and a plurality of further leaf network nodes (161', 162'), wherein the second leaf network node (162) corresponds to one of the further leaf network nodes (161', 162') or wherein one of the further leaf network nodes (161', 162') are used as the second leaf network node (162).

5. Method according to one of the preceding claims, wherein the central office point of delivery (110) or the central office point of delivery (110) and the further central office point of delivery (111) comprise(s) a control functionality or control plane (180, 180'), a management functionality or management plane (190, 190'), as well as an edge functionality or service (160, 160'), wherein the switching fabric (115) or the switching fabric (115) and the further switching fabric (115') realize a transport functionality or service,
wherein especially both the first and the second leaf network nodes (161, 162) comprise traffic shaping hardware components, especially comprising significant Ternary Content Address Memory, TCAM.

6. Method according to one of the preceding claims, wherein, in the second step, regarding the combination of the first and second access nodes (151, 152) and/or the combination of the first and second end users or subscribers, the respective communication services are provided for all these access nodes and/or end users or subscribers, in or according to an emergency mode of operation and/or in a reduced or curtailed manner.

7. Method according to one of the preceding claims, wherein, in the second step, regarding the second access node (152) and/or regarding the second end users or subscribers, the respective communication services are provided in or according to a normal mode of operation and/or unimpeded, and regarding the first access nodes (151) and/or regarding the first end users or subscribers, the respective communication services are provided according to an emergency mode of operation and/or in a reduced or curtailed manner.

8. Method according to one of the preceding claims, wherein, in the second step, regarding both
-- a part of the first access node (151) and/or a part of the first end users or subscribers, and
-- a part of the second access node (152) and/or a part of the second end users or subscribers,
the respective communication services are provided in or according to a normal mode of operation and/or unimpeded,
and regarding the residual of the first and second access nodes (151, 152) and/or of the first and second end users or subscribers, the respective communication services are provided according to an emergency mode of operation and/or in a reduced or curtailed manner.

9. Method according to one of the preceding claims, wherein providing communication services according to an emergency mode of operation and/or in a reduced or curtailed manner involves at least two different emergency modes of operation, wherein
-- a first emergency mode of operation relates to providing only an emergency functionality, especially emergency calls, and
-- a second emergency mode of operation relates to providing a limited functionality especially regarding at least one of the following aspects:
-- acquiring and/or processing metering information and/or accounting information and/or flow or queue counter information,
-- handling and/or processing of queues, especially providing hierarchical quality-of-service scheduling.

10. Method according to one of the preceding claims, wherein a priority indication is associated or assigned to each communication request or to each request of communication services, wherein providing communication services according to an emergency mode of operation and/or in a reduced or curtailed manner involves providing or processing communication requests or the requests of communication services only in case that the respective priority indication of the communication requests or of the requests of communication services has certain values, especially only in case that the respective priority indication exceeds certain values.

11. System for operating a broadband access network (120) of a telecommunications network (100) comprising at least one central office point of delivery (110), the central office point of delivery (110) comprising a switching fabric (115) comprising a plurality of spine network nodes (171, 172) and a plurality of leaf network nodes (161, 162), wherein the central office point of delivery (110) comprises or is connected to an access functionality (150) being realized by means of a plurality of access nodes (151, 152, 153) that terminate physical subscriber lines providing communication services to end users or subscribers of the telecommunications network (100),
wherein a first access node (151) is connected or linked to a first leaf network node (161) and a second access node (152) is connected or linked to a second leaf network node (162), wherein the first access node (151) is related to first end users or subscribers and the second access node (152) is related to second end users or subscribers,
wherein the first access node (151) is connected or homed to both the first and the second leaf network node (161, 162),
wherein in order to provide for a service continuity of or regarding the first access node (151) and the first end users or subscribers in case of a failure situation or an overload situation of the first leaf network node (161), the system is configured and dimensioned such that:
-- at least part of the communication services related to the first access node (151) and the first end users or subscribers is taken over or provided by the second leaf network node (162),
-- the second leaf network node (162) provides communication services related to both the first and second access nodes (151, 152), wherein regarding the combination of the first and second access nodes (151, 152) and/or the combination of the first and second end users or subscribers, the respective communication services are provided, at least regarding a part of these access nodes and/or end users or subscribers, in or according to an emergency mode of operation and/or in a reduced or curtailed manner.

12. Broadband access network (120) or telecommunications network (100) for operating a broadband access network (120) of a telecommunications network (100) comprising at least one central office point of delivery (110), the central office point of delivery (110) comprising a switching fabric (115) comprising a plurality of spine network nodes (171, 172) and a plurality of leaf network nodes (161, 162), wherein the central office point of delivery (110) comprises or is connected to an access functionality (150) being realized by means of a plurality of access nodes (151, 152, 153) that terminate physical subscriber lines providing communication services to end users or subscribers of the telecommunications network (100),
wherein a first access node (151) is connected or linked to a first leaf network node (161) and a second access node (152) is connected or linked to a second leaf network node (162), wherein the first access node (151) is related to first end users or subscribers and the second access node (152) is related to second end users or subscribers,
wherein the first access node (151) is connected or homed to both the first and the second leaf network node (161, 162),
wherein in order to provide for a service continuity of or regarding the first access node (151) and the first end users or subscribers in case of a failure situation or an overload situation of the first leaf network node (161), the broadband access network (120) or the telecommunications network (100) is configured and dimensioned such that:
-- at least part of the communication services related to the first access node (151) and the first end users or subscribers is taken over or provided by the second leaf network node (162),
-- the second leaf network node (162) provides communication services related to both the first and second access nodes (151, 152), wherein regarding the combination of the first and second access nodes (151, 152) and/or the combination of the first and second end users or subscribers, the respective communication services are provided, at least regarding a part of these access nodes and/or end users or subscribers, in or according to an emergency mode of operation and/or in a reduced or curtailed manner.

13. Central office point of delivery configured for being operated in a broadband access network (120) or in a telecommunications network (100) according to claim 12.

14. Program comprising a computer readable program code which, when executed on a computer and/or on a network node of a telecommunications network (100) and/or on a leaf node (161, 162) of a switching fabric (115) as part of a first or second central office point of delivery (110, 111), or in part on the network node of a telecommunications network (100) and/or in part on the leaf node (161, 162) of a switching fabric (115) as part of a first or second central office point of delivery (110, 111), causes the computer and/or the network node of the telecommunications network (100) and/or the leaf node (161, 162) of a switching fabric (115) as part of a first or second central office point of delivery (110, 111) to perform a method according one of claims 1 to 10.

15. Computer-readable medium comprising instructions which when executed on a computer and/or on a network node of a telecommunications network (100) and/or on a leaf node (161, 162) of a switching fabric (115) as part of a first or second central office point of delivery (110, 111), or in part on the network node of a telecommunications network (100) and/or in part on the leaf node (161, 162) of a switching fabric (115) as part of a first or second central office point of delivery (110, 111), causes the computer and/or the network node of the telecommunications network (100) and/or the leaf node (161, 162) of a switching fabric (115) as part of a first or second central office point of delivery (110, 111) to perform a method according one of claims 1 to 10.
